# EUROPEAN PATENT APPLICATION

(11) **EP 4 654 367 A1**
(43) Date of publication of application: **26.11.2025**
(21) Application number: 24920716.8
(22) Date of filing: 26.11.2024
(51) Int. Cl.: H01M 50/383, H01M 50/367, H01M 50/224, H01M 50/249

(54) **BATTERY ASSEMBLY COVER, BATTERY PACK, AND VEHICLE**

(30) Priority: 02.04.2024 KR 20240044746
(71) Applicant: LG Energy Solution, Ltd., Seoul 07335 (KR)
(72) Inventor: PARK, Won Kyoung, Daejeon 34122 (KR); CHO, Young Il, Daejeon 34122 (KR); SHIN, Jong Hong, Daejeon 34122 (KR); KIM, Young Gil, Daejeon 34122 (KR)
(74) Representative: BCKIP Part mbB
(86) International application number: PCT/KR2024/018880
(87) International publication number: WO 2025/211528

(57) **Abstract**

Disclosed herein are a battery assembly cover including: an inner covering portion covering a battery assembly and having a plurality of venting holes; an outer covering portion covering the inner covering portion from an outside, separated from the inner covering portion, and defining a venting space with the inner covering portion; and a plurality of outer blocking portions in the venting space and between adjacent venting holes dividing the venting space into a plurality of spaces, a battery pack, and a vehicle.

## Description

### TECHNICAL FIELD

The present disclosure relates to a battery assembly cover which is combined with a battery module or assembly to cover a battery assembly therein, effectively prevents flame propagation between adjacent battery cells when gas or flame occur due to deterioration of a battery cell, and maximally prevents flame propagation to the outside of the battery module, while smoothly venting gas, etc., a battery pack, and a vehicle.

### BACKGROUND

Recently, technologies for reducing carbon have been actively developed to address environmental problems, such as abnormal temperatures. In order to reduce carbon, energy is to be produced in an eco-friendly way rather than using fossil fuels, the produced energy is to be stored in the form of electric energy, and the stored electric energy is to be used in vehicles, various industrial sites, and homes.

In order to utilize electric energy for reducing carbon, the use of batteries to and from which electric energy is stored and drawn out is essential. Therefore, securing battery performance is essential to sufficiently store electric energy and use the electric energy without inconvenience.

Batteries mainly use a reduction-oxidation reaction of metal ions, and metal ions are used with high density to increase the capacity, charge/discharge performance, and efficiency of batteries, and research has been actively conducted on materials that make up electrolytes and solid electrolytes. However, in general, as the performance of batteries develops, there is a problem that stability decreases.

Batteries used in vehicles, industries, and homes are manufactured in physical units called packs. A battery pack has a plurality of battery cells embedded inside a battery case and seals the same to prevent fire from spreading to the outside in the event of an accident, such as battery thermal runaway, and protects the internal battery cells from being deteriorated by the influence of an external environment or damaged due to physical reasons.

In a battery pack, a number of battery cells are installed in an intermediate form of a module or a cell assembly (cell module assembly (CMA)). In the case of a battery module or cell assembly, a number of battery cells are assembled into a single module or assembly, and a number of modules are fastened inside a pack case, thereby completing a battery pack. When servicing the battery, maintenance is performed in units of these modules or assemblies, thereby facilitating maintenance.

A number of unit battery cells that make up a module or assembly includes a positive electrode, a negative electrode, and an electrolyte. Since battery cells generate heat during charging and discharging, effective heat dissipation for the battery cells is required. In addition, from the perspective of the battery module, assembly, or battery pack, a design for efficient heat dissipation is necessary to prevent safety accidents.

Meanwhile, batteries may deteriorate due to manufacturing errors, excessive charging and discharging, and aging. In addition, if battery deterioration continues, a fire may eventually occur. Therefore, it is necessary to prepare in advance to prevent a fire from occurring in the battery. To this end, it is important to continuously sense the status of the battery, recognize and respond in advance when a problem occurs, and minimize damage when an unexpected problem occurs.

In particular, when a fire occurs in one of a plurality of battery cells, it is necessary to minimize the spread of the fire to the adjacent battery cells and minimize the spread of flame to the outside, thereby delaying the external leakage of the flame as much as possible. In addition, it is desirable to quickly vent gas occurring from the battery cell to reduce the occurrence of a sudden flame and secure stability.

The contents described as the related art have been provided only to assist in understanding the background of the present disclosure and should not be considered as corresponding to the related art known to those having ordinary skill in the art.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

According to an embodiment of the present disclosure, the present disclosure provides a battery assembly cover which is combined with a battery module or assembly to cover a battery assembly therein, effectively prevents flame propagation between adjacent battery cells when gas or flame occur due to deterioration of a battery cell, and maximally prevents flame propagation to the outside of the battery module, while smoothly venting gas, etc., a battery pack, and a vehicle.

The technical problems to be addressed in the present disclosure are not limited to the technical problems mentioned above, and other technical problems not mentioned may be clearly understood by a person having ordinary knowledge in the technical field to which the present disclosure pertains from the description below.

Among embodiments, a battery assembly cover comprises: an inner covering portion coupled to a case having a battery assembly, where the case covers the battery assembly, wherein the inner covering portion has a plurality of venting holes; an outer covering portion covering the inner covering portion from an outside, separated from the inner covering portion, and defining a venting space with the inner covering portion; and a plurality of outer blocking portions in the venting space and between the adjacent venting holes dividing the venting space into a plurality of spaces.

The venting holes of the inner covering portion may be in positions corresponding to battery cells of the battery assembly.

The venting holes of the inner covering portion may extend in a longitudinal direction along a direction in which a battery cell of the battery assembly extends.

The inner covering portion may include a frame made of a metal material and a cover body insert-injection molded into the frame.

The cover body may be on the same plane as the frame.

The venting holes may be in the cover body.

The battery assembly cover may be coupled to the case by an edge of the frame.

The battery assembly cover may further comprise: an inner blocking portion protruding from the inner covering portion toward a side of a battery cell of the battery assembly.

The inner blocking portion may be between adjacent battery cells and may be configured to prevent flame propagation between the battery cells.

The inner and outer blocking portions may protrude in opposite directions from a same point on the inner covering portion.

The inner blocking portion and the outer blocking portion may be together as one body with the inner covering portion.

The inner blocking portion may be between adjacent venting holes and is configured to prevent flame propagation between the venting holes.

The inner blocking portion may extend in a longitudinal direction along a direction in which the battery cell extends, and an installation groove may extend in the longitudinal direction in the inner blocking portion.

An end portion of a pressure pad between adjacent battery cells may be in the installation groove.

A blocking wall may be between end portions of adjacent inner blocking portions, and an inner space between the adjacent inner blocking portions may be blocked by the blocking wall and communicates with the venting holes.

A clip section extending toward a pressure pad between battery cells of the battery assembly and protruding to grip the pressure pad may be at an end portion of the inner blocking portion.

The outer covering portion may cover the inner covering portion from an outside, and may be separated from the inner covering portion so that the venting holes are not exposed to the outside.

The outer covering portion may have an open end so that the venting space is open at an end portion of the outer covering portion.

The venting space may be divided into a plurality of outer blocking portions, thereby defining a plurality of venting channels.

The inner covering portion and the outer covering portion may be connected through the outer blocking portion, and the inner covering portion, outer covering portion and outer blocking portion may be together as one body.

Among embodiments, a battery pack and a vehicle comprise the battery assembly cover described above.

The battery assembly cover may be combined with a battery module or assembly to cover a battery assembly therein, effectively prevent flame propagation between adjacent battery cells when gas or flame occur due to deterioration of a battery cell, and maximally prevent flame propagation to the outside of the battery module, while smoothly venting gas, etc.

In particular, by primarily preventing direct flame propagation between adjacent battery cells inside the cover and secondarily effectively preventing flame propagation through the venting hole outside the cover, and at the same time, enabling smooth venting of gas through the cover, thereby providing the most effective structure for preventing or delaying the spread of fire.

The effects obtained from the present disclosure are not limited to the effects mentioned above, and other effects not mentioned will be clearly understood by those skilled in the art to which the present disclosure pertains from the description below.

### BRIEF DESCRIPTION OF THE DRAWINGS

FIG. 1 is a perspective view illustrating a battery assembly cover according to an embodiment of the present disclosure.
FIG. 2 is a partially enlarged view of the battery assembly cover illustrated in FIG. 1.
FIG. 3 is a perspective view of the battery assembly cover illustrated in FIG. 1 viewed from below.
FIG. 4 is a partially enlarged view of the battery assembly cover illustrated in FIG. 3.
FIG. 5 is a diagram illustrating a frame of the battery assembly cover illustrated in FIG. 1.
FIG. 6 is a diagram illustrating a state in which an inner covering portion is combined with the frame illustrated in FIG. 5.
FIG. 7 is a diagram illustrating a state in which the battery assembly cover illustrated in FIG. 1 is combined with a case to form a battery module.
FIG. 8 is a cross-sectional view taken along line A-A of the battery module illustrated in FIG. 7.
FIG. 9 is a cross-sectional view taken along line B-B of the battery module illustrated in FIG. 7.
FIG. 10 is a diagram illustrating a battery pack and a vehicle to which a battery assembly cover is applied according to an embodiment of the present disclosure.

### DETAILED DESCRIPTION

In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and spirit of the present disclosure.

It will be understood that, although the terms first, second, etc. may be used herein to describe various elements, these elements should not be limited by these terms. These terms are only used to distinguish one element from another.

As used herein, the singular forms "a", "an" and "the" are intended to include the plural forms as well, unless the context clearly indicates otherwise.

It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

In the following description, usage of suffixes, such as 'module', 'part' or 'unit' used for referring to elements is given merely to facilitate explanation of the present disclosure, without having any significant meaning by itself.

When it is mentioned that a certain element is "connected to" or "electrically connected to" a second element, the first element may be directly connected or electrically connected to the second element, but it should be understood that a third element may intervene therebetween. Meanwhile, when it is mentioned that a certain element is "directly connected to" or "directly electrically connected to" a second element, it should be understood that there is no third element therebetween.

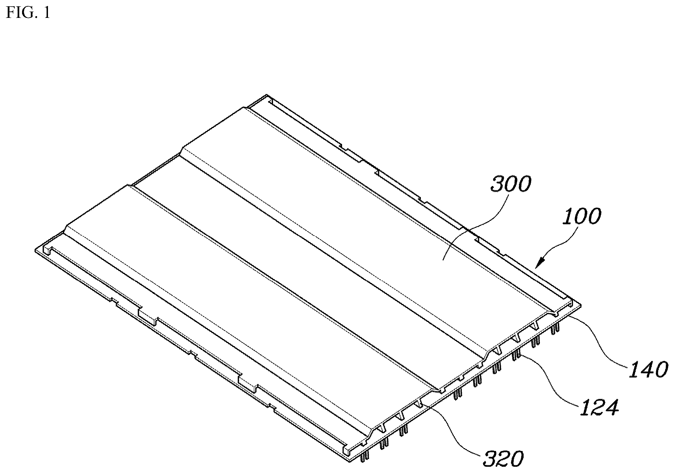

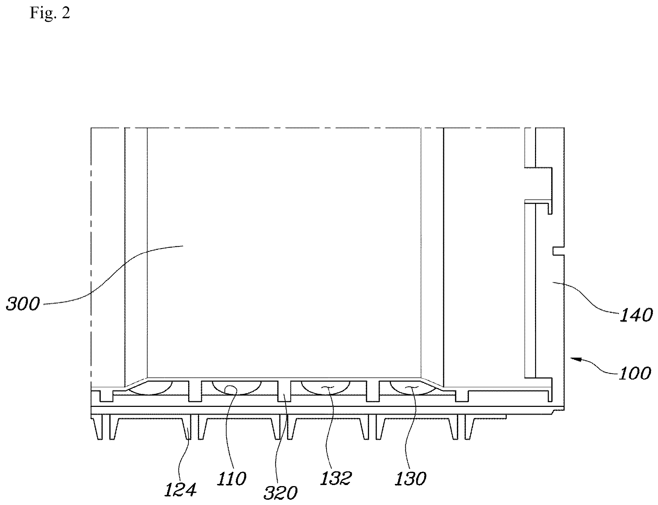

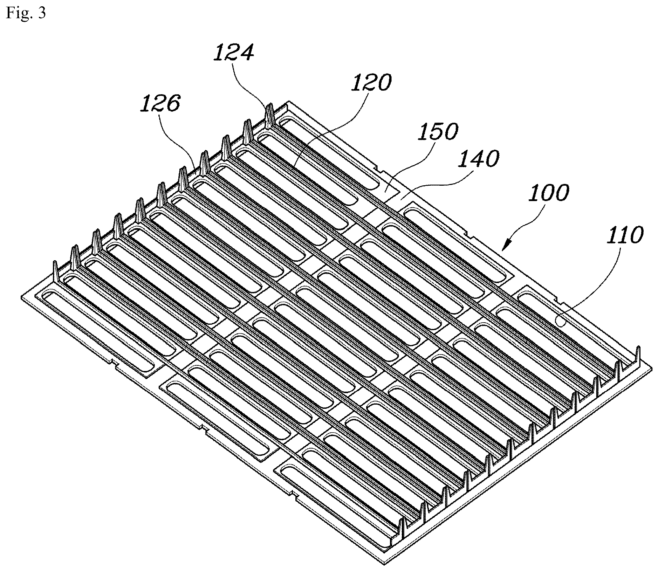

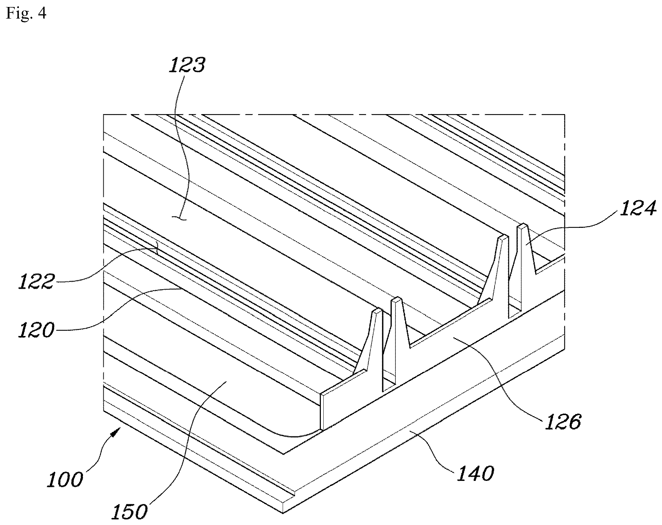

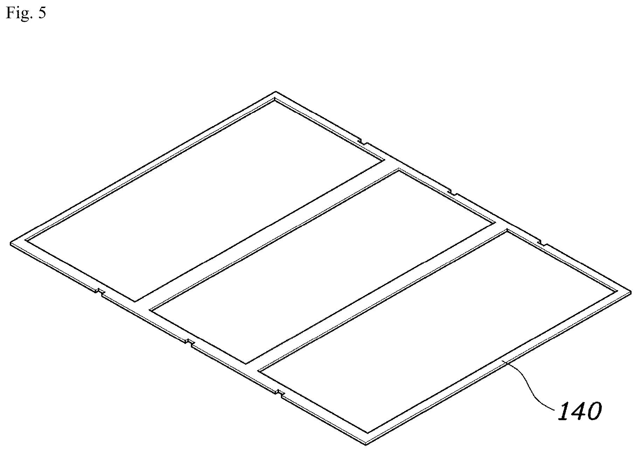

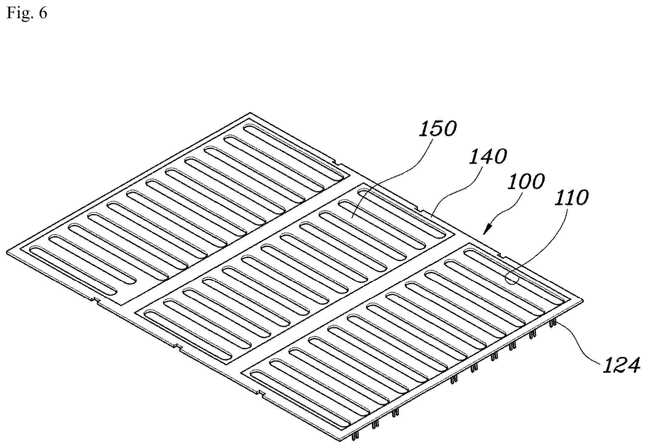

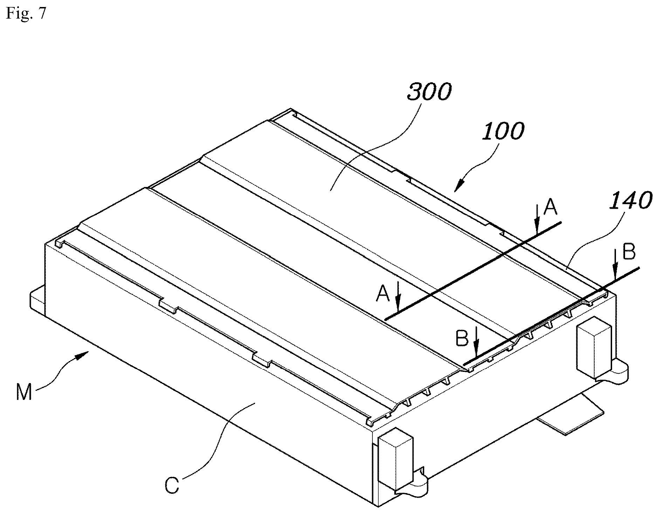

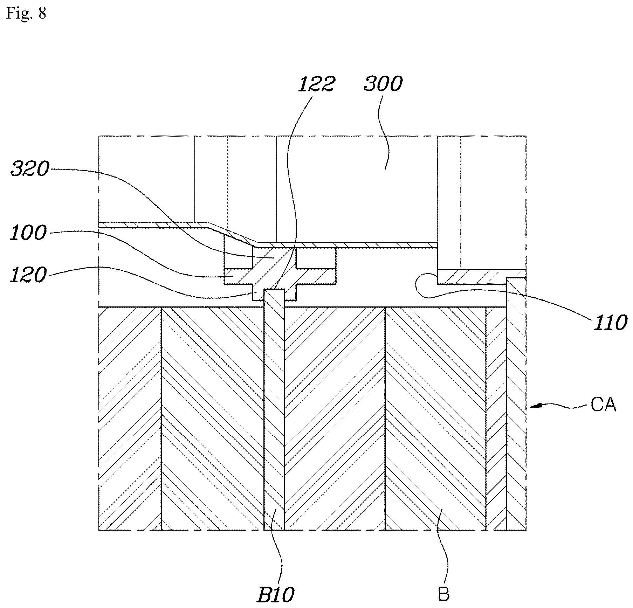

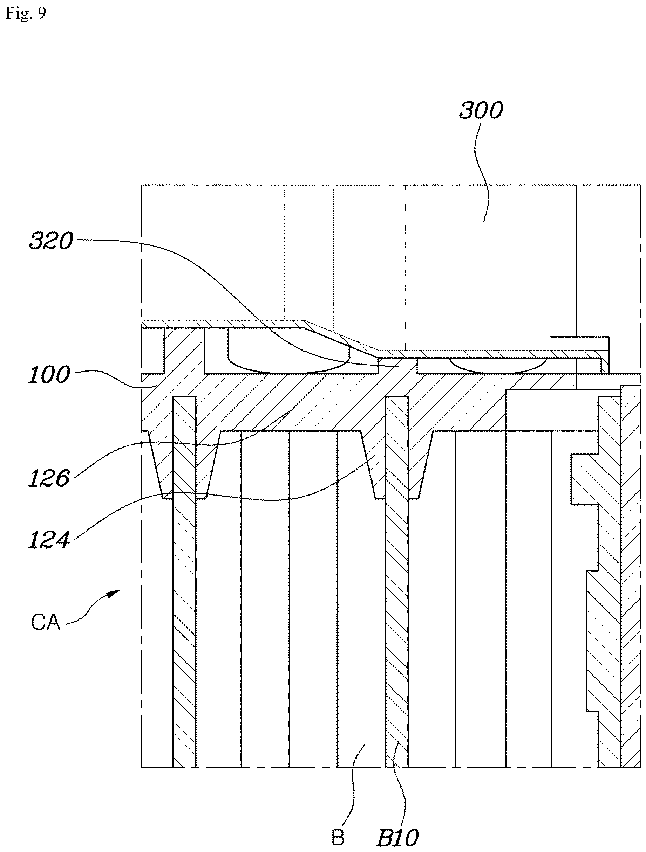

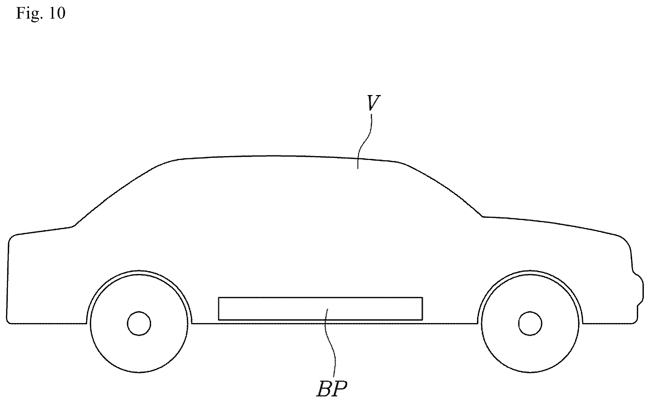

FIG. 1 is a perspective view illustrating a battery assembly cover according to an embodiment of the present disclosure, FIG. 2 is a partially enlarged view of the battery assembly cover illustrated in FIG. 1, FIG. 3 is a perspective view of the battery assembly cover illustrated in FIG. 1 viewed from below, FIG. 4 is a partially enlarged view of the battery assembly cover illustrated in FIG. 3, FIG. 5 is a diagram illustrating a frame of the battery assembly cover illustrated in FIG. 1, FIG. 6 is a diagram illustrating a state in which an inner covering portion is combined with the frame illustrated in FIG. 5, FIG. 7 is a diagram illustrating a state in which the battery assembly cover illustrated in FIG. 1 is combined with a case to form a battery module, FIG. 8 is a cross-sectional view taken along line A-A of the battery module illustrated in FIG. 7, FIG. 9 is a cross-sectional view taken along line B-B of the battery module illustrated in FIG. 7, and FIG. 10 is a diagram illustrating a battery pack and a vehicle to which a battery assembly cover is applied according to an embodiment of the present disclosure.

Hereinafter, the embodiments disclosed in this specification will be described in detail with reference to the accompanying drawings, but regardless of the reference numerals, like components are given like reference numerals and redundant descriptions thereof will be omitted.

FIGS. 1 to 4 are diagrams illustrating a battery assembly cover according to an embodiment of the present disclosure. The battery assembly cover according to the present disclosure includes an inner covering portion 100 coupled to a case C in which a battery assembly CA is built to cover the battery assembly CA and having a plurality of venting holes 110 formed therein; an outer covering portion 300 covering the inner covering portion 100 from the outside spaced apart from the inner covering portion 100 and forming a venting space 130 with the inner covering portion 100; and a plurality of outer blocking portions 320 arranged in the venting space 130 and provided between adjacent venting holes 110 to divide the venting space 130 into a plurality of spaces.

The battery assembly CA includes a plurality of battery cells B. The battery assembly CA is inserted and built into the case C, and as the cover of the present disclosure is coupled to the case C and closed, a battery module M or a cell assembly is configured as shown in FIG. 7. A plurality of battery modules M are built into a pack case, and the pack case is closed through a pack lid to complete a battery pack BP. The battery pack BP is installed in a vehicle V, ESS, or other industrial equipment and functions as a power source.

Since the battery assembly CA are configured by assembling a plurality of battery cells B, if a fire occurs due to deterioration in one of the battery cells, there is a possibility that flame will spread to the adjacent battery cells. Therefore, in the case of the battery assembly, it is necessary to prevent the propagation of flame between adjacent battery cells as much as possible.

Meanwhile, in the case of the battery cell B, if deterioration occurs, gas, etc. is first vented in a specific direction to prevent explosions, etc., and to prevent or delay the occurrence of flame as much as possible. Therefore, in the case of the battery cell B, the gas, etc. is vented in a specific direction, and in the illustrated embodiment, a case in which the gas venting is designed to occur upward based on the drawing is illustrated.

Since the gas venting of the battery cell B occurs upward, flame is also likely to flow upward in the same direction as the venting. Therefore, in the case of the present disclosure, the flame propagation between adjacent battery cells above the battery assembly CA is prevented, thereby preventing direct flame propagation between battery cells.

To this end, the battery assembly cover according to the present disclosure includes an inner covering portion 100 coupled to the case C in which the battery assembly CA is built to cover the battery assembly CA and having a plurality of venting holes 110 formed therein.

Specifically, the inner covering portion 100 is formed by insert-injection molding a plastic or composite material into a frame 140 illustrated in FIG. 5. The frame 140 may be formed of a metal material, such as aluminum, to serve as a skeleton supporting the cover, and the inner covering portion 100 and an outer covering portion 300 are formed together with plastic or the like to achieve insulation. The frame 140 is preferably formed of a metal material, but of course, it is not limited to metal.

In addition, since the inner covering portion 100 is a portion that directly faces the battery cell B, a number of venting holes 110 are formed. When the battery cell B deteriorates, gas, etc. is vented through the venting holes 110 of the inner covering portion 100.

Meanwhile, the outer covering portion 300 may be insert-injection molded into the frame 140 together with the inner covering portion 100. The inner covering portion 100 covers the inner side facing the battery assembly CA from the cover and blocks the propagation of flame, and the outer covering portion 300 covers from the outer side and prevents flame propagation from the outside. Since the inner covering portion 100 and the outer covering portion 300 are insert-injection molded together to the frame 140, the mutual fixation is solidified and separation is impossible, so that even when a flame occurs, there is no lifting or deformation and the flame is reliably blocked.

The outer covering portion 300 covers the inner covering portion 100 from the outer side separated from the inner covering portion 100. Also, the outer covering portion 300 forms the venting space 130 with the inner covering portion 100. Therefore, gas or flame vented through the venting hole 110 of the inner covering portion 100 is introduced and guided into the venting space 130. In this case, since the outer covering portion 300 covers from the outermost portion, gas or flame in the venting space 130 is not leaked out (upward) but is safely guided to a predetermined path (laterally).

An outer blocking portion 320 is provided in the venting space 130. The outer blocking portion 320 is disposed in the venting space 130 and is provided between adjacent venting holes 110 to divide the venting space 130 into a plurality of venting channels 132. As illustrated in the drawing, a plurality of outer blocking portions 320 are provided and spaced apart from each other in the venting space 130. Through this, the venting space 130 may be divided into a plurality of outer blocking portions 320 to form a plurality of venting channels 132. Therefore, the gas or flame vented from each battery cell B is first vented through the venting hole 110 to flow into the venting channel 132, is safely guided laterally through the venting channel 132, and discharged to the outside. Therefore, the flame occurring in one battery cell B is blocked from flowing out by the venting channel 132 and guided, so that the flame propagation to the other battery cell which is reversely adjacent through the other adjacent venting hole may be prevented.

FIG. 8 is a cross-sectional view taken along line A-A of the battery module illustrated in FIG. 7, and FIG. 9 is a cross-sectional view taken along line B-B of the battery module illustrated in FIG. 7. Referring to this, the venting hole 110 of the inner covering portion 100 may be formed in a position corresponding to the battery cell B that constitutes the battery assembly CA. In the case of the illustrated embodiment, two battery cells B are stacked adjacently to form one bank. A bank is a set formed by gathering one or more battery cells B, and a bank may be formed by gathering three to four battery cells B. A pressure pad B10 is provided between the banks to limit swelling of the battery cells B and prevent direct propagation of flame, and it is also possible to implement cooling of the battery cells B through heat transfer through the pressure pad B10.

The venting hole 110 for venting gas is formed in the inner covering portion 100 of the present disclosure, and the venting hole 110 may be formed in a position corresponding to an upper side of the battery cell B. In the case of the illustrated embodiment, one bank is configured through two battery cells B, and the venting hole 110 is formed in a position corresponding to the bank. In this case, the venting hole 110 is formed in a position corresponding to the two battery cells B.

Also, the venting hole 110 of the inner covering portion 100 is formed to extend in a longitudinal direction along a direction in which the battery cell B extends, so that even if gas is discharged from one point of the battery cell B, the gas may be smoothly vented through the venting hole 110.

Meanwhile, the inner covering portion 100 may include the frame 140 formed of a metal material and a cover body 150 that is insert-injection molded into the frame 140. Also, the cover body 150 may be formed on the same plane as the frame 140 as illustrated in FIG. 6. In addition, the venting hole 110 may be formed in the cover body 150. Through this, the venting hole 110 may be molded in an injection stage, so that additional hole processing is not required and the manufacturing may be facilitated.

Also, the battery assembly cover may be coupled to the case C through the edge of the frame 140. That is, since the frame 140 and the cover body 150 are formed on the same plane, when the cover is coupled to the case C through the frame 140, a gap between the cover and the battery cell B may be reduced, thereby improving the energy density. Also, when the frame 140 is formed of a metal material, the frame 140 may be easily coupled to the case C formed of the same material.

Meanwhile, an inner blocking portion 120 protruding toward the battery cell B side may be formed in the inner covering portion 100. The inner blocking portion 120 may be provided between adjacent battery cells B or between banks to prevent flame propagation between battery cells B or banks.

Specifically, as described above, the venting hole 110 may have a shape that extends in the longitudinal direction along the direction in which the battery cell B is formed. Also, accordingly, the inner blocking portion 120 may also be formed to extend in the longitudinal direction along the direction in which the battery cell B extends. Therefore, gas or flame discharged from the bank or battery cell B corresponding to the venting hole 110 is blocked by the inner blocking portion 120 and vented only to the corresponding venting hole 110. As a result, direct flame propagation between the battery cells B within the inner covering portion 100 is blocked.

Meanwhile, an installation groove 122 may be formed to extend in the longitudinal direction in the inner blocking portion 120 as illustrated in FIG. 4. Also, an upper end portion of the pressure pad B10 located between adjacent battery cells B or banks may be inserted into the installation groove 122 as illustrated in FIGS. 8 to 9. The pressure pad B10 blocks direct propagation of flame and heat between the battery cells B or banks, and since the upper end of the pressure pad B10 is fitted into the installation groove 122 and regulated in position, when a fire occurs in the battery cell B, the pressure pad B10 is not pushed and maintained in position, stably blocking flame propagation between the battery cells B.

In addition, since the upper end of the pressure pad B10 is fitted into the inner blocking portion 120, the battery cell B or bank is surrounded by the pressure pad B10 and the inner covering portion 100 and is in a closed state. In addition, since it has a structure that communicates with the outside only through the venting hole 110, the generated gas or flame does not spread directly to the adjacent battery cell B or bank but is safely vented only through the venting hole 110.

In addition, as illustrated in FIGS. 8 and 9, the inner blocking portion 120 and the outer blocking portion 320 may be formed to protrude in the opposite directions from the same point of the inner covering portion 100. Through this, the gas or flame discharged through the venting hole 110 is not transferred to the adjacent venting channel and venting is stably guided. Therefore, the outer blocking portion 320 blocks the gas or flame discharged through one venting hole 110 from being reversely introduced through another venting hole adjacent to the side and transmitted to the adjacent battery cell or bank.

In this manner, the inner blocking portion 120 blocks the propagation of the flame from the inside based on the inner covering portion 100, and the outer blocking portion 320 blocks the propagation of the flame from the outside, and since the inner blocking portion 120 and the outer blocking portion 320 are formed at the same position, the flame vented through one venting hole 110 is completely blocked from propagating based on before and after venting.

In addition, the inner blocking portion 120 and the outer blocking portion 320 may be formed together as a single body with the inner covering portion 100 during insert-injection molding. Through this, the manufacturing cost may be reduced and the coupling between the inner blocking portion 120 and the outer blocking portion 320 may be strengthened so that deformation does not occur during venting of fire or gas.

As illustrated in FIG. 4 or 9, a blocking wall 126 is formed between the end portions of adjacent inner blocking portions 120, and an inner space 123 formed between adjacent inner blocking portions 120 is blocked from opening to the side by the blocking wall 126 and may communicate upwardly with the venting hole 110. That is, the battery cell B or bank is located between a pair of adjacent inner blocking portions 120, and gas or flame occurring in the corresponding battery cell B preferentially stays in the inner space 123. In this state, since the end portion of the inner space 123 is blocked by the blocking wall 126, venting to the end portion is prevented, and only upward venting to the venting hole 110 occurs. Accordingly, flame propagation to the side of the battery assembly CA is blocked, and through this, high-voltage terminals, busbars, components, etc. located on the side are protected, thereby preventing electrical short-circuiting.

In addition, a clip portion 124 may be formed at the end portion of the inner blocking portion 120, extend toward the pressure pad B10 located between the battery cells B, and protrude to grip the pressure pad B10. The pressure pad B10 is inserted at the top into the installation groove 122 of the inner blocking portion 120 and is firmly fixed in position at the end portion through the clip portion 124, thereby more reliably blocking the propagation of flame. In addition, when the clip portion 124 is formed together with the blocking wall 126, the assembly rigidity may be reinforced so that flame blocking of the blocking wall 126 may be more reliably guaranteed.

Meanwhile, the outer covering portion 300 may cover the inner covering portion 100 from the outside spaced apart from the inner covering portion 100, thereby preventing the venting hole 110 from being directly exposed to the outside. Through this, the venting hole 110 communicates with the outside only laterally through the venting channel 132, thereby preventing direct gas or flame discharge upwardly from the battery module M, thereby reducing the direct attack of flame on the pack lid of the battery pack BP to enable protection of a passenger seat in a vehicle. In the case of electric vehicles, etc., in a case in which the battery pack is installed under the passenger seat of the vehicle, if flame is directly transmitted upwardly from the battery pack, it is unavoidably disadvantageous for the protection of the passenger seat. In the case of the present disclosure, by guiding the flame to the side of the battery module, the upward attack of the flame may be reduced at the battery pack level.

In addition, an end portion of the outer covering portion 300 may be open so that the venting space 130 may be opened in the end portion of the outer covering portion 300. Through this structure, flame occurring in the battery cell B is blocked by the inner blocking portion 120 and the blocking wall 126 and is discharged only upwardly through the venting hole 110. Then, the flame discharged upwardly through the venting hole 110 is again blocked by the outer covering portion 300 and is guided only laterally through the venting channel 132. Then, the flame is discharged through the open end portion of the venting channel 132. Therefore, the flame occurring in the battery cell B is guided along a path that bent a plurality of times, so that the aggressiveness of the flame is significantly reduced, and flammable particles contained in the gas or flame are naturally reduced in kinetic energy thereof and remain, thereby reducing the leakage to the outside of the battery module M.

In particular, while the flame is guided, direct propagation to the adjacent battery cell B on the side is blocked through the pressure pad B10 and the inner blocking portion 120, and direct propagation to a high-voltage component is also blocked through the blocking wall 126 and the clip portion 124. In addition, reverse propagation to another adjacent venting hole 110 is also blocked through the outer blocking portion 320. Through this, the flame is blocked from propagating to the adjacent battery cell B due to the plurality of blocking structures and the stability of the overall battery module M and battery pack BP is significantly improved.

According to the battery assembly cover of the present disclosure, it is combined with a battery module or assembly to cover a battery assembly therein, effectively prevent flame propagation between adjacent battery cells when gas or flame occur due to deterioration of a battery cell, and maximally prevent flame propagation to the outside of the battery module, while smoothly venting gas, etc.

In particular, by primarily preventing direct flame propagation between adjacent battery cells inside the cover and secondarily effectively preventing flame propagation through the venting hole outside the cover, and at the same time, enabling smooth venting of gas through the cover, thereby providing the most effective structure for preventing or delaying the spread of fire.

FIG. 10 shows a state in which a battery pack BP to which such a battery assembly cover is applied is mounted on a vehicle V. Although the illustrated embodiment shows the case of the vehicle V, the battery assembly cover and battery pack according to the present disclosure may be applied to battery systems of various vehicles, such as internal combustion engine vehicles, electric vehicles, hybrid vehicles, and fuel cell vehicles, and in addition to vehicles, the battery assembly cover and battery pack according to the present disclosure may also be applied to battery systems in various fields, such as industrial energy storage system (ESS) or household ESS, and small battery packs.

Although the present disclosure has been described above with reference to embodiments, it will understood by those skilled in the art that various modifications and changes may be made to the present disclosure without departing from the idea and scope of the present disclosure as set forth in the following claims.

## Claims

1. A battery assembly cover comprising:
an inner covering portion coupled to a case having a battery assembly, wherein the case covers the battery assembly, wherein the inner covering portion has a plurality of venting holes;
an outer covering portion covering the inner covering portion from an outside, separated from the inner covering portion, and defining a venting space with the inner covering portion; and
a plurality of outer blocking portions in the venting space and between the adjacent venting holes dividing the venting space into a plurality of spaces.

2. The battery assembly cover of claim 1, wherein
the venting holes of the inner covering portion are in positions corresponding to battery cells of the battery assembly.

3. The battery assembly cover of claim 1, wherein
the venting holes of the inner covering portion extend in a longitudinal direction along a direction in which a battery cell of the battery assembly extends.

4. The battery assembly cover of claim 1, wherein
the inner covering portion includes a frame made of a metal material and a cover body insert-injection molded into the frame.

5. The battery assembly cover of claim 4, wherein
the cover body is on the same plane as the frame.

6. The battery assembly cover of claim 4, wherein
the venting holes are in the cover body.

7. The battery assembly cover of claim 4, wherein
the battery assembly cover is coupled to the case by an edge of the frame.

8. The battery assembly cover of claim 1, further comprising:
an inner blocking portion protruding from the inner covering portion toward a side of a battery cell of the battery assembly.

9. The battery assembly cover of claim 8, wherein
the inner blocking portion is between adjacent battery cells and is configured to prevent flame propagation between the battery cells.

10. The battery assembly cover of claim 8, wherein
the inner and outer blocking portions protrude in opposite directions from a same point on the inner covering portion.

11. The battery assembly cover of claim 8, wherein
the inner blocking portion and the outer blocking portion are together as one body with the inner covering portion.

12. The battery assembly cover of claim 8, wherein
the inner blocking portion is between adjacent venting holes and is configured to prevent flame propagation between the venting holes.

13. The battery assembly cover of claim 8, wherein
the inner blocking portion extends in a longitudinal direction along a direction in which the battery cell extends, and an installation groove extends in the longitudinal direction in the inner blocking portion.

14. The battery assembly cover of claim 13, wherein
an end portion of a pressure pad between adjacent battery cells is in the installation groove.

15. The battery assembly cover of claim 8, wherein
a blocking wall is between end portions of adjacent inner blocking portions, and an inner space between the adjacent inner blocking portions is blocked by the blocking wall and communicates with the venting holes.

16. The battery assembly cover of claim 8, wherein
a clip section extending toward a pressure pad between battery cells of the battery assembly and protruding to grip the pressure pad is at an end portion of the inner blocking portion.

17. The battery assembly cover of claim 1, wherein
the outer covering portion covers the inner covering portion from an outside, and is separated from the inner covering portion so that the venting holes are not exposed to the outside.

18. The battery assembly cover of claim 1, wherein
the outer covering portion has an open end so that the venting space is open at an end portion of the outer covering portion.

19. The battery assembly cover of claim 1, wherein
the venting space is divided into a plurality of outer blocking portions, thereby defining a plurality of venting channels.

20. The battery assembly cover of claim 1, wherein
the inner covering portion and the outer covering portion are connected through the outer blocking portion, and the inner covering portion, outer covering portion and outer blocking portion are together as one body.

21. A battery pack comprising the battery assembly cover of claim 1.

22. A vehicle comprising the battery assembly cover of claim 1.
